# EUROPEAN PATENT APPLICATION

(11) **EP 4 836 478 A1**
(43) Date of publication of application: **04.11.2026**
(21) Application number: 26164788.7
(22) Date of filing: 13.03.2026
(51) Int. Cl.: H04W 12/122, H04W 12/50, H04W 12/63, H04W 12/67

(54) **NETWORK TOPOLOGY CONTROL TO AVOID RADIO FREQUENCY INDISCRETIONS**

(30) Priority: 29.04.2025 US 202519193321
(71) Applicant: The Boeing Company, Arlington, VA 22202 (US)
(72) Inventor: PEREZ, Tristan, Arlington, 22202 (US); STRONG, Russell J., Arlington, 22202 (US); HENDERSON, Jack Dylan, Arlington, 22202 (US); COURTS, Jarrad Paul, Arlington, 22202 (US)
(74) Representative: Boult Wade Tennant LLP

(57) **Abstract**

Techniques for configuring a communication network to avoid indiscretions, where the communication network include a plurality of network nodes and a plurality of radio-frequency (RF) communication channels, are presented. The techniques include: obtaining network state data, where the network state data includes identifications of geographical locations of the plurality of network nodes; obtaining position identifications for a plurality of electronic surveillance units; encoding an indiscretion value weighted graph that includes a plurality of graph vertices and a plurality of edges, where a respective graph vertex includes an identification of a respective network node, and where a respective edge includes a respective indiscretion value with respect to the plurality of electronic surveillance units; determining a subgraph of the indiscretion value weighted graph, where the subgraph spans the plurality of graph vertices; and configuring a topology of the communication network according to the subgraph.

## Description

### Field

This disclosure relates generally to communication networks that include Radio-Frequency communication channels. In particular, this disclosure relates to the operation of such networks in adversarial (e.g., hostile) environments.

### Background

Communication networks used in the context of a battle can span a number of zones in the battlespace, e.g., permissive zones, contested zones, and/or highly-contested zones. At the forward edge in a highly contested zone, communication network nodes are often in proximity of enemy force elements, including electronic surveillance units. In this zone, Radio-Frequency (RF) transmissions may controlled to prevent emissions into undesired sectors, and thus prevent communication network node detection by enemy surveillance units. RF emissions that reach undesirable locations (e.g., locations of enemy surveillance units) within the area of operations are referred to as "indiscretions."

### Summary

There is described herein a method of configuring a communication network to avoid indiscretions, wherein the communication network comprises a plurality of network nodes and a plurality of radio-frequency (RF) communication channels, tis presented. The method includes: obtaining network state data, wherein the network state data comprises identifications of geographical locations of the plurality of network nodes; obtaining position identifications for a plurality of electronic surveillance units; encoding an indiscretion value weighted graph comprising a plurality of graph vertices and a plurality of edges, wherein a respective graph vertex comprises an identification of a respective network node, and wherein a respective edge comprises a respective indiscretion value with respect to the plurality of electronic surveillance units; determining a subgraph of the indiscretion value weighted graph, wherein the subgraph spans the plurality of graph vertices; and configuring a topology of the communication network according to the subgraph.

Various optional features of the above method examples include the following. The configuring the topology of the communication network may include restricting RF tight beam communications amongst the network nodes to specified communication channels corresponding to the subgraph. The method may include repeating, in real time, the obtaining the network state data, the obtaining the position identification, the encoding, the determining, and the configuring, such that the topology is reconfigured in real time and accounts for movement of at least one of a network node of the plurality of network nodes or an electronic surveillance unit of the plurality of electronic surveillance units. At least one network node may include a broad beam RF antenna and a tight beam RF antenna, and wherein the configuring comprises identifying whether communications using the tight beam RF antenna are permissible. The plurality of network nodes may include at least one uncrewed aircraft. A respective indiscretion value may include a composition of individual indiscretion values corresponding to the plurality of electronic surveillance units. A respective individual indiscretion value for a given transmitting network node, a given receiving network node, and a given electronic surveillance unit may include: a respective transmission power for the given transmitting network node, and a respective free space path loss between the given transmitting network node and the given receiving network node. The respective individual indiscretion value for the given transmitting network node, the given receiving network node, and the given electronic surveillance may further include a respective antenna gain in a direction of the given electronic surveillance unit obtained from an antenna of the given transmitting network node when transmitting in a direction of the given receiving network node. The network state data may further include: antenna information for each of the plurality of network nodes, and specified receiver power for at least one of the plurality of network nodes. The indiscretion value weighted graph may include a complete weighted graph, and wherein the subgraph is a minimum spanning tree for the complete weighted graph.

There is described herein a system for configuring a communication network to avoid indiscretions, wherein the communication network comprises a plurality of network nodes and a plurality of radio-frequency (RF) communication channels, is presented. The system includes: a non-transitory computer readable medium comprising instructions; and at least one electronic processor that executes the instructions to perform operations comprising: obtaining network state data, wherein the network state data comprises identifications of geographical locations of the plurality of network nodes; obtaining position identifications for a plurality of electronic surveillance units; encoding an indiscretion value weighted graph comprising a plurality of graph vertices and a plurality of edges, wherein a respective graph vertex comprises an identification of a respective network node, and wherein a respective edge comprises a respective indiscretion value with respect to the plurality of electronic surveillance units; determining a subgraph of the indiscretion value weighted graph, wherein the subgraph spans the plurality of graph vertices; and configuring a topology of the communication network according to the subgraph.

Various optional features of the above system examples include the following. The configuring the topology of the communication network may include restricting RF tight beam communications amongst the network nodes to specified communication channels corresponding to the subgraph. The operations may further include repeating, in real time, the obtaining the network state data, the obtaining the position identification, the encoding, the determining, and the configuring, wherein the operations reconfigure the topology in real time and account for movement of at least one of a network node of the plurality of network nodes or an electronic surveillance unit of the plurality of electronic surveillance units. At least one network node may include a broad beam RF antenna and a tight beam RF antenna, and the configuring may include identifying whether communications using the tight beam RF antenna are permissible. The plurality of network nodes may include at least one uncrewed aircraft. A respective indiscretion value may include a composition of individual indiscretion values corresponding to the plurality of electronic surveillance units. A respective individual indiscretion value for a given transmitting network node, a given receiving network node, and a given electronic surveillance unit may include: a respective transmission power for the given transmitting network node, and a respective free space path loss between the given transmitting network node and the given receiving network node. The respective individual indiscretion value for the given transmitting network node, the given receiving network node, and the given electronic surveillance may further include a respective antenna gain in a direction of the given electronic surveillance unit obtained from an antenna of the given transmitting network node when transmitting in a direction of the given receiving network node. The network state data may further include: antenna information for each of the plurality of network nodes, and specified receiver power for at least one of the plurality of network nodes. The indiscretion value weighted graph may include a complete weighted graph, and wherein the subgraph is a minimum spanning tree for the complete weighted graph.

Combinations, (including multiple dependent combinations) of the above-described elements and those within the specification have been contemplated by the inventors and may be made, except where otherwise indicated or where contradictory.

### Brief Description of the Drawings

Various features of the examples can be more fully appreciated, as the same become better understood with reference to the following detailed description of the examples when considered in connection with the accompanying figures, in which:
Fig. 1 illustrates controlling indiscretions through the use of communication nodes that have both broad beam Radio-Frequency (RF) antennas and tight beam RF antennas;
Fig. 2 illustrates a graph representing communication network nodes and communications between nodes for an example communication network;
Fig. 3 illustrates an indiscretion value weighted graph representing the example communication network of Fig. 2, and a corresponding RF emission map;
Fig. 4 illustrates a radiation pattern of a parabolic reflector antenna and a corresponding indiscretion map;
Fig. 5 is a block diagram of a system service for configuring a communication network to avoid indiscretions;
Fig. 6 illustrates a communication network topology for the initial communication network state and electronic surveillance unit positions shown in Fig. 3, as well as an associated RF emission map;
Fig. 7 illustrates a communication network topology after movement of the electronic surveillance unit positions shown in Fig. 6, as well as an associated RF emission map;
Fig. 8 illustrates a communication network topology after movement of the electronic surveillance unit positions shown in Fig. 7, as well as an associated RF emission map;
Fig. 9 illustrates a communication network topology after movement of the electronic surveillance unit positions shown in Fig. 8, as well as an associated RF emission map; and
Fig. 10 is a flow chart for a method of configuring a communication network to avoid indiscretions.

### Description of the Examples

Reference will now be made in detail to examples, illustrated in the accompanying drawings. Wherever convenient, the same reference numbers will be used throughout the drawings to refer to the same or like parts. In the following description, reference is made to the accompanying drawings that form a part thereof, and in which is shown by way of illustration specific examples of the present disclosure. These examples are described in sufficient detail to enable those skilled in the art to practice the disclosure and it is to be understood that other examples may be utilized and that changes may be made without departing from the scope of the claims. The following description is, therefore, merely exemplary.

At the forward edge of a battlespace, the topology of a communication network may be controlled so as to sustain communication services that support the mission and, at the same time, avoid indiscretions. Indiscretions include unwanted Radio-Frequency (RF) emissions into enemy surveillance capabilities. Indiscretions can lead to the discovery of communication network nodes, therefore exposing network and mission vulnerabilities if these nodes are suppressed or destroyed by enemy forces.

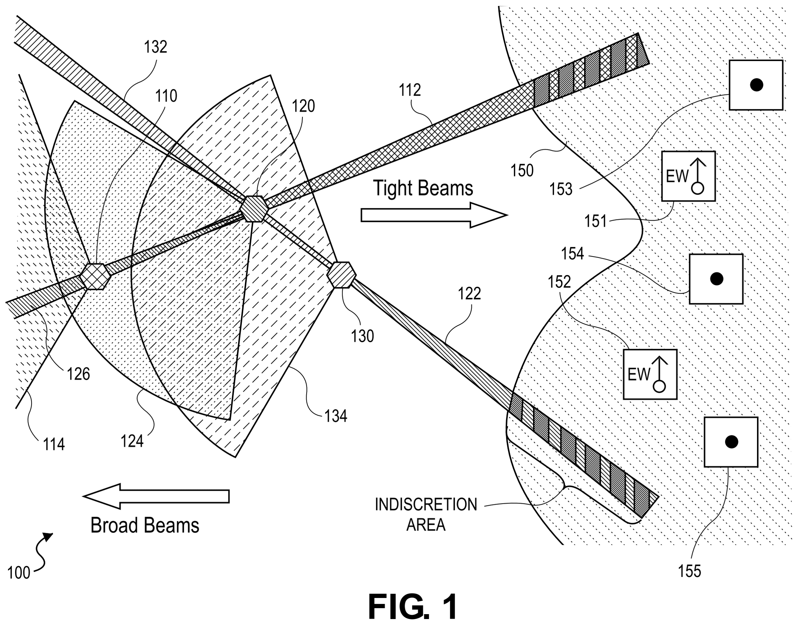

Fig. 1 illustrates controlling indiscretions through the use of communication nodes 110, 120, 130 that have both broad beam RF antennas and tight (or narrow) beam RF antennas. The communication nodes 110, 120, 130 include RF transceivers, can be implemented in any of a variety of forms, including terrestrial vehicles (e.g., terrestrial vehicles such as cars, trucks, tanks, etc.) whether crewed or uncrewed, crewed aerial vehicles (e.g., fixed-wing aircraft, rotary-wing aircraft, etc.), uncrewed aerial vehicles (e.g., multiple autonomous systems, etc.), surface vessels (e.g., ships, whether crewed or uncrewed), subsurface vessels (e.g., submarines), etc. The enemy force units 151, 152, 153, 154, 155 in the highly-contested zone 150 include electronic surveillance units 151, 152 (e.g., electronic warfare units), as well as kinetic weapon capabilities 153, 154, 155 (e.g., artillery, etc.).

Each communication node 110, 120, 130 can change beam-forming modes for in different directions. As shown in Fig. 1, communication node 110 transmits using a tight beam 112 in the direction of highly-contested zone 150, where indiscretions are possible, and transmits using a broad beam 114 into the permissive zone. Similarly, communication node 120 transmits using a tight beam 122 in the direction of the highly-contested zone, and transmits using a broad beam 124 into the permissive zone. Further, communication node 130 transmits using a tight beam 132 in the direction of the highly-contested zone, and transmits using a broad beam 134 into the permissive zone. Note that the communication nodes 110, 120, 130 may use their tight beam transmission modes in any direction, including in the direction of the permissive zone, as shown in Fig. 1 in reference to the tight beam 126 of the communication node 120. However, while narrow beams reduce the likelihood of node detection by enemy electronic surveillance units, indiscretions may still occur.

Some examples utilize information about beam characteristics of radio transmitters, communication network node locations, and enemy force element (e.g., electronic surveillance unit) locations to control the topology (e.g., communication channel connections, structure, and/or arrangement) of the communication network, e.g., in highly-contested zones of an area of operations. Some examples only allow direct node-to-node communication when indiscretions are unlikely to occur, while maintaining overall network connectivity. Some examples provide spatiotemporal control of RF transmission beams, which reduces the need to interrupt communications, and which can be used to increase the signal power and, therefore, the capacity of the communication channels.

Some examples provide techniques for edge topology control, which may improve (e.g., optimize) the communication network forward-edge topology. Some examples can be implemented as a mission-management service deployed among communication network nodes. Some examples can be used offline at a mission planning stage. Some examples can be used online in real time during an active mission, in order to adapt the communication network to dynamic changes in the battlespace due to mobile communication network nodes and/or updated intelligence about enemy force-element locations.

These and other features and advantages are shown and described herein in reference to the figures.

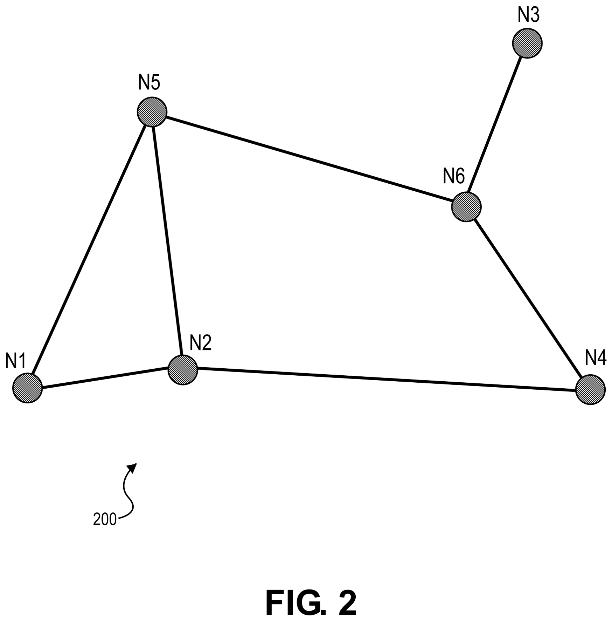

Fig. 2 illustrates a graph 200 representing communication network nodes and communications between nodes for an example communication network, according to various examples. In particular, the graph 200 represents a forward-edge-battlespace communication network with six nodes, denoted N₁, N₂, N₃, N₄, N₅, N₆. Each communication network node is represented by a corresponding graph vertex, denoted v₁, v₂, v₃, v₄, v₅, v₆, respectively, where V denotes the set of graph vertices. The vertices may be mapped to scale at positions corresponding the physical locations of the network nodes. The positions of the network nodes may be determined using Global Positioning System (GPS) or any other location determination technique. The set of edges *E =* {e₁, e₂, e₃, e₄, e₅, e₆, e₇} of the graph contains two-element subsets of V; for example, the elements eₖ may be of the form Eᵢⱼ = {vᵢ, vⱼ}. An edge Eᵢⱼ in the graph represents an enabled (e.g., direct-line-of-sight) communication channel between the network nodes Nᵢ and Nⱼ. As shown in Fig. 2, the graph edges *E* = {E₁₂, E₁₅, E₂₄, E₂₅, E₃₆, E₄₆, E₅₆} represent that network nodes N₁, N₂, are in communication (e.g., have an operational RF communication channel), network nodes N₁, N₅, are connected, network nodes N₂, N₄, are in communication, network nodes N₂, N₅, are in communication, network nodes N₃, N₆, are in communication, network nodes N₄, N₆, are in in communication, and network nodes N₅, N₆, are connected. In this document, communication network nodes are occasionally identified with graph vertices for purposes of identification and illustration. However, it is important to recognize that the communication network nodes each include RF transceivers in examples. Thus, the identification of graph vertices with network nodes is merely for notation and does not indicate abstraction.

Various examples may utilize one or more of the following properties of communication networks: (1) communication network node pairs with an operational communication channel may communicate bidirectionally; (2) communication network nodes are able to use and control narrow beams for radio transmission into particular directions; (3) the communication network has access to a list of communication network node locations; (4) the communication network has access to a list for enemy force element (e.g., electronic surveillance unit) locations that is updated online in real time using mission intelligence; and (5) the communication network has access to models of different communication network node radio emitter (e.g., physical antenna) characteristics.

Further terminology is set forth presently. Property (1) implies that if Eᵢⱼ is in E, then so it is the element Eⱼᵢ. Because of this property of the edge set, the graph is called "undirected." When an edge exists between a pair of vertices in a graph, the vertices are said to be "adjacent." In the graph shown in Fig. 2, N₄ is adjacent to N₂ and N₆, but not adjacent to N₁, N₃ and N₅. A graph in which every vertex is adjacent to every other vertex in the graph is called a "complete graph" (each vertex has an edge to every other vertex). A "path" exists between the vertices Nᵢ and Nⱼ if there is a sequence of adjacent vertices starting at Nᵢ and finishing at Nⱼ. In the graph 200, an example of a path between N₃ and N₁ is the sequence N₃, N₆, N₅, N₁. A graph is "connected" if for every pair of vertices in *V* there exists a path between them. Within the context of this disclosure, a connected graph represents a communication network where every node can communicate with any other node in the network, not necessarily though a direct-line-of-sight communication channel.

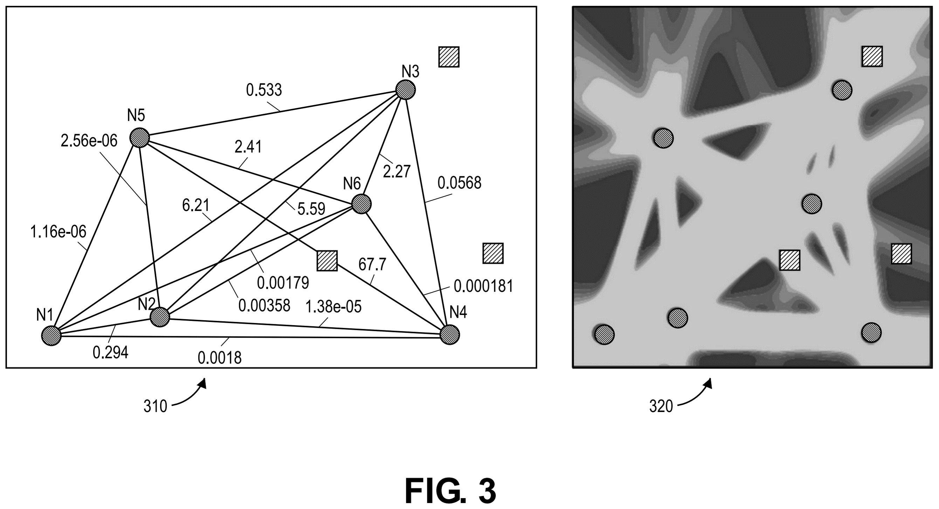

Some examples configure a topology of a communication network by encoding a weighted graph, as described in detail presently. Briefly, the vertices of the weighted graph are as shown and described in reference to Fig. 2, and the edges of the weighted graph are assigned indiscretion values as weights. The indiscretion values represent the risk of indiscretion for communications between the corresponding nodes. Some examples configure the communication network topology according to an optimization with respect to the weighted graph. The optimization may generate a subgraph of the weighed graph, and the nodes of the communication network may be restricted to communicating among themselves only within communication channels that correspond to edges that are present in the subgraph. Details of the process summarized in this paragraph follow, in reference to Figs. 3-10.

An optimization according to various examples may be represented as follows, by way of non-limiting example.

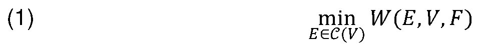

In Equation (1), 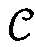 (*V*) represents the set of all connected graphs with nodes *V*. The term *F* = {F₁, F₂, . . . , Fₗ} represents the set of enemy force elements (e.g., electronic surveillance units). The term *W*(*E, V, F*) represents an indiscretion value for the total communication network indiscretions produced for *V, E,* and *F* as above. An optimal solution to the problem characterized by Equation (1) may be represented as follows, by way of non-limiting example.

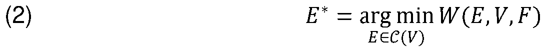

The notation of Equation (2) means that given *V* and *F*, an example may find the edge set *E** among all the sets *E* in 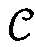 (*V*) for which *W*(*E, V, F*) is minimum.

Note that in a very large communication network, examples may be applied only to the communication subnetwork close to enemy locations. Examples may embrace only a portion of all of the nodes in a full communication network. In the notation of Equations (1) and (2) above, for example, *V* may denote a subset of the nodes in a given communication network. Thus, examples may be applied to a communication subnetwork on a forward-edge battlespace.

Techniques for determining indiscretion values are disclosed presently in reference to Fig. 3.

Fig. 3 illustrates an indiscretion value weighted graph 310 representing the example communication network of Fig. 2, and a corresponding RF emission map 320, according to various examples. In Fig. 3, the circles represent nodes in the communication network, and the squares represent electronic surveillance units. The indiscretion value weighted graph 310 is for the same example forward-edge-battlespace communication network as described in reference to Fig. 2, except instead of showing communications between nodes as in Fig. 2, Fig. 3 depicts indiscretion values for communications between nodes. In particular, as shown in Fig. 3, each edge between nodes is labeled with a corresponding indiscretion value indicative of indiscretions caused by communications between the associated nodes.

The indiscretion values shown in Fig. 3 are computed using information of the location of three electronic surveillance units (represented by squares) as described in detail below. As shown in Fig. 3, bidirectional communication between nodes N₁ and N₅ results in a very low indiscretion value, W₁₅ = 1.16 × 10⁻⁵, because there are no electronic surveillance units nearby. By contrast, the indiscretion value for communications between nodes N₄ and N₅, W₄₅ = 67.7, is high, because the communication between nodes N₄ and N₅ would generate RF emissions that can be detected by an electronic surveillance unit physically situated between these nodes. Fig. 3 further shows the RF emission map 320 resulting from the communication network state represented by the indiscretion value weighted graph 310.

According to various examples, and by way of non-limiting example, in general, the indiscretion value for a total communication network may be defined as a composition, e.g., the sum, of the indiscretions of each edge in the corresponding graph. Again by way of non-limiting example, an indiscretion value for a total communication network sum may be represented by the following sum: $W \left(E, V, F\right) = {\sum }_{{E}_{ij ∈ E}} w \left({E}_{ij}, F\right) = {\sum }_{\left\{{N}_{i}, {N}_{j}\right\} ∈ E} I \left({N}_{i}, {N}_{j}, F\right) + I \left({N}_{j}, {N}_{i}, F\right)$ (3)

In Equation (3), *w*(*Eᵢⱼ, F*) represents the two-way indiscretion value for the edge *Eᵢⱼ*, and *I*(*Nᵢ, Nⱼ, F*) represents the level of indiscretion caused by transmitting from node *Nᵢ* to node *Nⱼ* in the communication network with respect to the *F* electronic surveillance units. Similarly, *I*(*Nⱼ, Nᵢ, F*) is the indiscretion value for transmitting from node *Nⱼ* to node *Nᵢ* with respect to the *F* electronic surveillance units. Due to the bi-directionality of the line-of-sight communication between nodes in the communication network, both of the terms *I*(*Nᵢ, Nⱼ, F*) and *I*(*Nⱼ, Nᵢ, F)* are included. This is because transmitting from node *Nᵢ* to node *j* can have a different value of indiscretions than transmitting from node *Nⱼ* to node *Nᵢ,* depending on the location of electronic surveillance units.

The indiscretion value *I*(*Nᵢ, Nⱼ, F*) for two nodes and one or more electronic surveillance units depends upon several application-specific characteristics, including transmitter power, antenna radiation pattern of the transmitter, location of the transmitting node, and the location of the electronic surveillance units. By way of non-limiting example, an indiscretion value for one-way communication from node *Nᵢ* to node *Nⱼ*, operating in the presence of electronic surveillance units *F*, may be expressed as follows, by way of non-limiting example: $I \left({N}_{i}, {N}_{j}, F\right) = {\sum }_{k = 1}^{l} {10}^{\frac{Pw \left({N}_{i}, {N}_{j}, {F}_{k}\right)}{10}}$ (4)

In Equation (4), *l* represents the number of electronic surveillance units, Pw(*Nᵢ*, *Nⱼ*, *Fₖ*) represents the indiscretion power in decibels (dB) at the position of the *k*-th electronic surveillance unit resulting from transmitting from node *Nᵢ* to *Nⱼ.* This indiscretion power may be expressed as follows, by way of non-limiting example: $Pw \left({N}_{i}, {N}_{j}, {F}_{k}\right) = {P}_{Tx} \left({N}_{i}, {N}_{j}\right) - FSPL \left({N}_{i}, {F}_{k}\right) + G \left({N}_{i}, {N}_{j}, {F}_{k}\right)$ (5)

In Equation (5), P_{Tx},(*Nᵢ*, *Nⱼ*) represents the transmission power configured in the node *Nᵢ* when communicating with the node *Nⱼ*, FSPL(*Nᵢ, Fₖ*) represents the free space path loss between the locations of the transmitting node *Nᵢ* and the electronic surveillance unit *Fₖ*, and *G*(*Nᵢ, Nⱼ, Fₖ*) represents the antenna gain in the direction of the electronic surveillance unit *Fₖ* obtained from the antenna radiation pattern when node *Nᵢ* communicates with node *Nⱼ.*

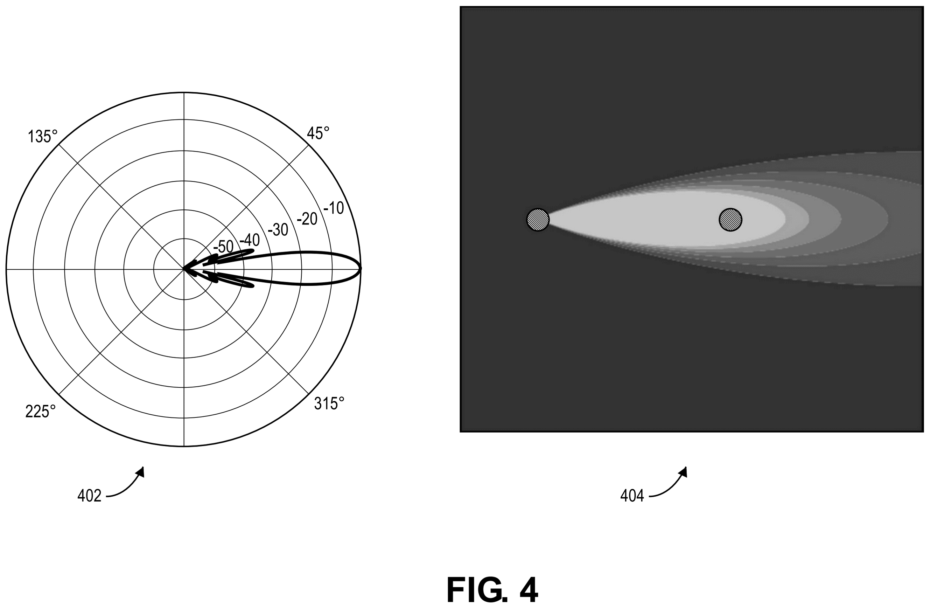

The transmitted power, P_{Tx}, is selected based on the distance between the transmitting and receiving nodes to result in a desired received power at the receiver node. The antenna gain is computed using a model of the radiation pattern of antenna of the communication nodes. For the indiscretion values shown in Fig. 3, a generic parabolic reflector was used. More generally, any antenna gain parameters may be used, a non-limiting example of which is shown and described in reference to Fig. 4.

Fig. 4 illustrates a radiation pattern 402 of a parabolic reflector antenna and a corresponding indiscretion map 404, according to various examples. The radiation pattern 402 is depicted as a polar plot of the relative field strength in dB of the radio waves emitted by the antenna at different angles in the far field. Indiscretion power map 404 is shown for when a transmitting node (left circle) transmits to a receiving node (right circle) with a particular PTx. Thus, Fig. 4 illustrates an antenna radiation pattern 402 for an antenna with associated antenna information that identifies a generic parabolic reflector, as well as an associated indiscretion power map 404.

Returning to the description of Fig. 3, the indiscretion values for each pair of nodes are computed for the antenna information shown and described in reference to Fig. 4. The indiscretion values shown in Fig. 3 may be considered as edge weights, such that the graph 310 forms a weighted graph. By way of non-limiting example, a weight representing two-way indiscretion values between nodes *Nᵢ* and *Nⱼ* in the presence of electronic surveillance units *F* may be determined as follows: ${w}_{ij} = w \left({E}_{ij}, F\right) = I \left({N}_{i}, {N}_{j}, F\right) + I \left({N}_{j}, {N}_{i}, F\right)$ (6)

Thus, the indiscretion value weighted graph 310 shown and described in reference to Fig. 3 may be characterized by a weighed graph *G =* (*V, E, W*)*,* where Wis the set of two-way indiscretion values assigned as edge weights. Note that the weights do not in general connote distance. Rather, the weights assigned to graph edges correspond to indiscretion values.

According to various examples, once the indiscretion value weighted graph is encoded, as shown and described herein in reference to Figs. 3 and 4, for example, a subgraph is determined, e.g., as characterized by Equation (2). In general, a solution E* to Equation (2) may have the form of a tree. (A connected graph without cycles or loops - paths that start and finish at the same node - may be referred to as a tree.) A tree structure satisfies the connectivity constraint specified in reference to 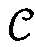 (*V*)*.* Also, adding any more edges would result in a higher cost solution. As such, an optimal solution E* is the tree that minimizes the indiscretion value for the total communication network, e.g., as set forth in reference to Equation (3). In general, a graph *H* is a sub-graph of a graph *G* if every vertex and edge of *H* is a vertex and edge of *G*. If *H* is a sub-graph of *G* with the same number of vertices as *G*, then *H* is a spanning subgraph of *G*. If a spanning subgraph is a tree, then it may be referred to as a spanning tree. A spanning tree of a weighted graph for which the sum of weights is minimum may be referred to as a minimum spanning tree. Accordingly, an optimal solution *E** may be the minimum spanning tree of the complete indiscretion value weighted graph. Provided that the indiscretion values for each communication channel in the communication network are unique, then there always exists a unique solution for the optimal set of links to establish in the communication network connectivity.

Any of a variety of techniques may be used by various examples to determine a minimum spanning tree of an indiscretion value weighted graph. By way of non-limiting example, the Kruskal algorithm, which produces a minimum spanning tree for every connected weighted graph, may be used. *See, e.g.,* Erickson, J., Algorithms (2019) (2st ed.) ISBN: 9781792644832. Moreover, existing software libraries include methods for determining the minimum spanning tree of an undirected-weighted graph, and such method may be applied to the indiscretion value weighted graphs of various examples. For example, the Python package NetworkX provides three methods for the minimum spanning tree problem, where the Kruskal algorithm is the default one. The overall runtime of Kruskal algorithm is O(E log V ) Testing of runtimes using the Python based NetworkX library on a standard engineering laptop computer for computing a minimum spanning tree E* according to an example implementation for communication networks with 20, 200, and 500 nodes and randomly generated indiscretion values required 0.99 ms, 30.94 ms, and 333.59 ms, of runtime, respectively. Parallel and distributed algorithms to solve the minimum spanning tree problem also exist and may be used according to various examples. Accordingly, examples may operate in real time for typical communication networks, with latencies of well under one second.

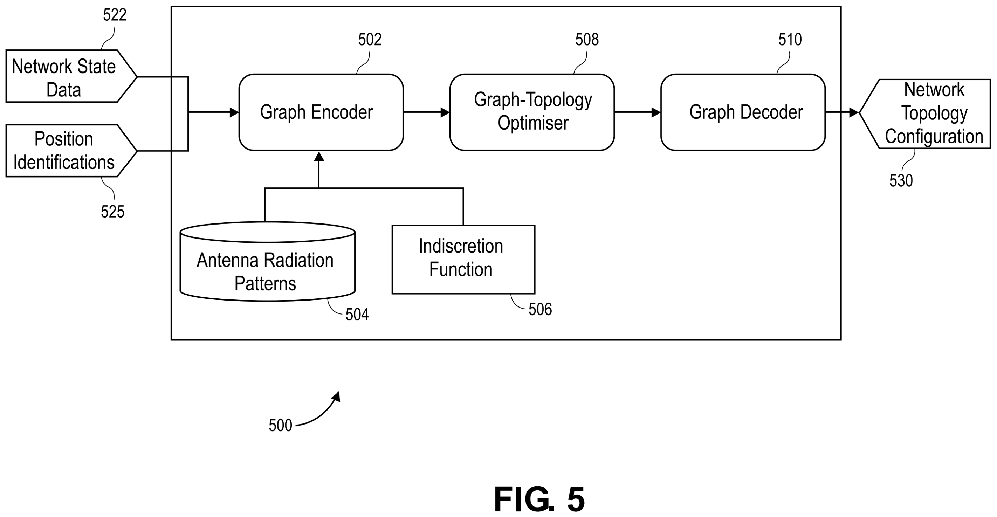

Fig. 5 is a block diagram of a system 500 service for configuring a communication network to avoid indiscretions, according to various examples.

As input, the system 500 service takes the communication network state data 522 and position identifications 524 (e.g., GPS positions, latitude/longitude identifications, etc.) of one or more electronic surveillance units. The communication network state data 522 represents the positions of the nodes in the communication network, the topology of the communication network, and information of the antenna types that the nodes use and the desired received power at the various nodes. For online usage, the communication network state data 522 may include the current communication network node positions and topology in real time. For offline usage, the communication network state data may include a nominal or anticipated network node positions and topology. The position identifications 524 may be obtained from surveillance by friendly entities, e.g., on-ground systems, satellite images, electronic surveillance, etc. The system 500 service outputs an updated communication network topology configuration.

The graph encoder 502 takes the input communication network state data 522 and position identifications 524 and outputs a data structure with a complete weighted graph for the current communication network state, e.g., as shown and described herein in reference to Fig. 3. In order to do this, the graph encoder 502 access an antenna radiation pattern database 504, which includes information as shown and described herein in reference to Fig. 4, together with the indiscretion function 506 that implements a discretion value assignment function, as shown and described herein in reference to Fig. 3.

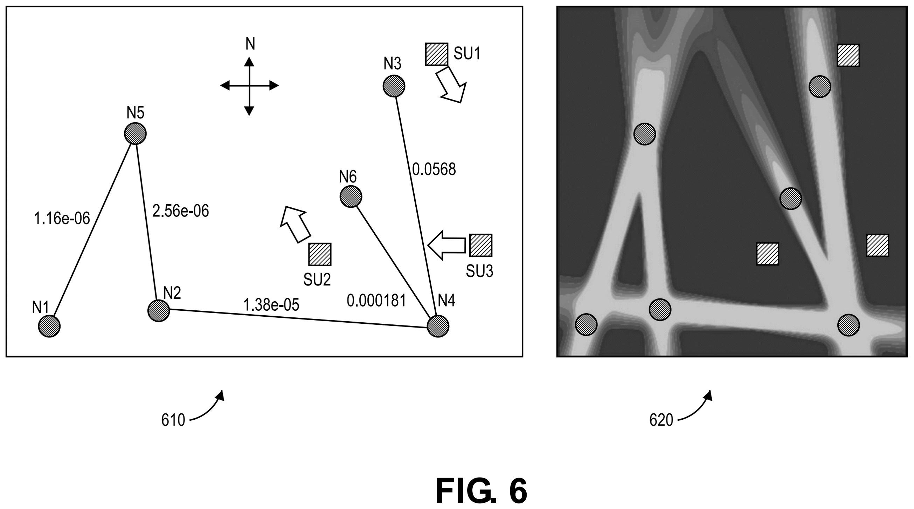

The graph-topology optimizer 508 receives as input the complete weighted graph and calls a process to generate a subgraph, e.g., as shown and described herein in reference to Fig. 3 and illustrated by Figs. 6-9.

The graph decoder 510 translates the graph topology produced by the graph-topology optimizer 508 into the updated network topology configuration 530. The communication network then implements the network topology configuration 530, e.g., by restricting communication channels to those that correspond to edges in the subgraph, disabling certain communication channels, and/or restricting certain addresses.

As indicated above, examples may be utilized offline or online in real time. Examples of such usages are described presently in reference to Figs. 6-9.

Fig. 6 illustrates a communication network topology 610 produced by an example for the initial communication network state and electronic surveillance unit positions shown in Fig. 3, as well as an associated RF emission map 620. As shown in Fig. 6, the topology communication network topology produced by the example has the structure of a tree. A comparison of the associated RF emission map 620 to the initial RF emission map 320 shown and described in reference to Fig. 3 shows a significant reduction of indiscretions at locations of the electronic surveillance units. Examples may thus be used offline as part of mission planning, where anticipated or hypothetical clusters of electronic surveillance units can be used to prevent RF emissions into specified sectors. For instance, examples may be used offline to analyze hypothetical scenarios, e.g., the most-likely cases, the worst cases, or any of a variety of contingency cases.

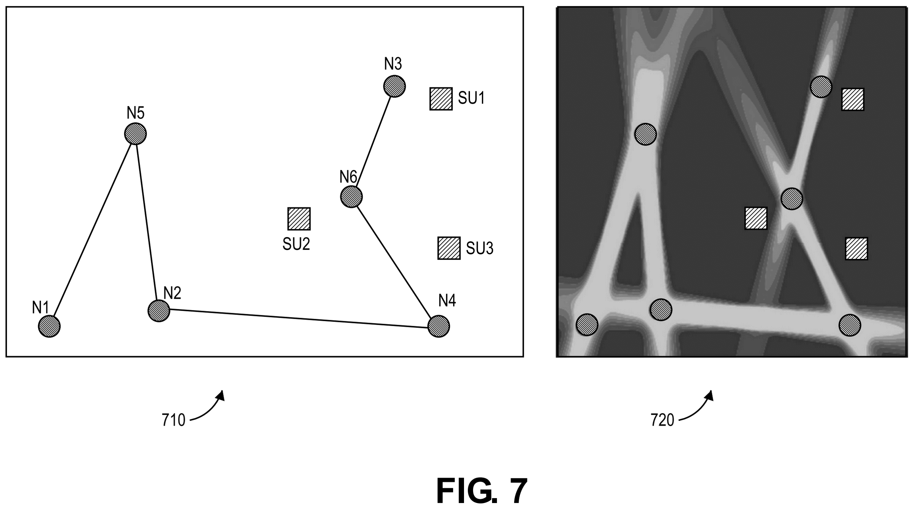

For mission re-planning and managing dynamic changes in the battlespace, examples can be used online to update the communication network topology in real time as updates of the positions of the electronic surveillance units become available. Examples can also take into consideration dynamic changes in the location of the communication network nodes for applications in which one or more nodes are mobile. Figs. 7-9 illustrate how an example may reconfigure communication network topology in real time in response to movement of electronic surveillance units as indicated by the arrows shown in Fig. 6. That is, Figs. 7-9 illustrate dynamic communication network topology reconfiguration as electronic surveillance unit SU1 moves south-southeast, electronic surveillance unit SU2 moves northwest, and electronic surveillance unit SU3 moves west.

Fig. 7 illustrates a communication network topology 710 produced by an example after movement of the electronic surveillance unit positions shown in Fig. 6, as well as an associated RF emission map 720.

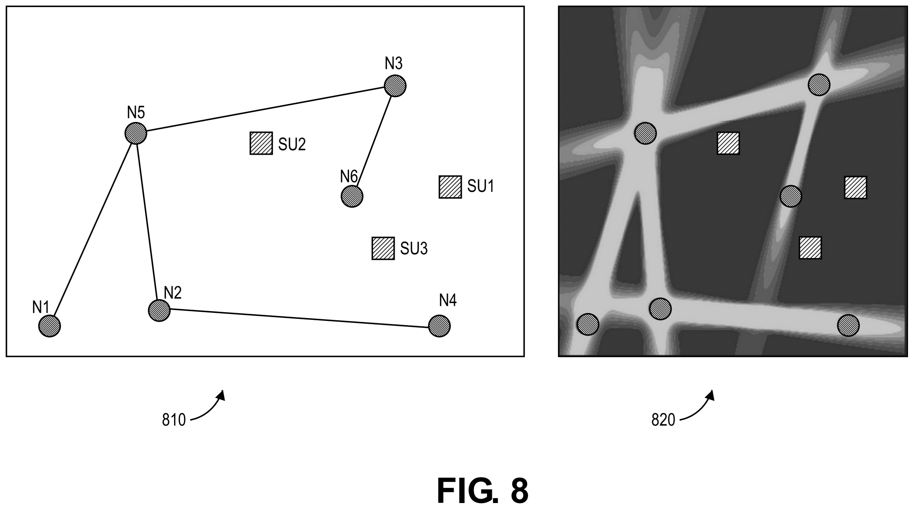

Fig. 8 illustrates a communication network topology 810 produced by an example after movement of the electronic surveillance unit positions shown in Fig. 7, as well as an associated RF emission map 820.

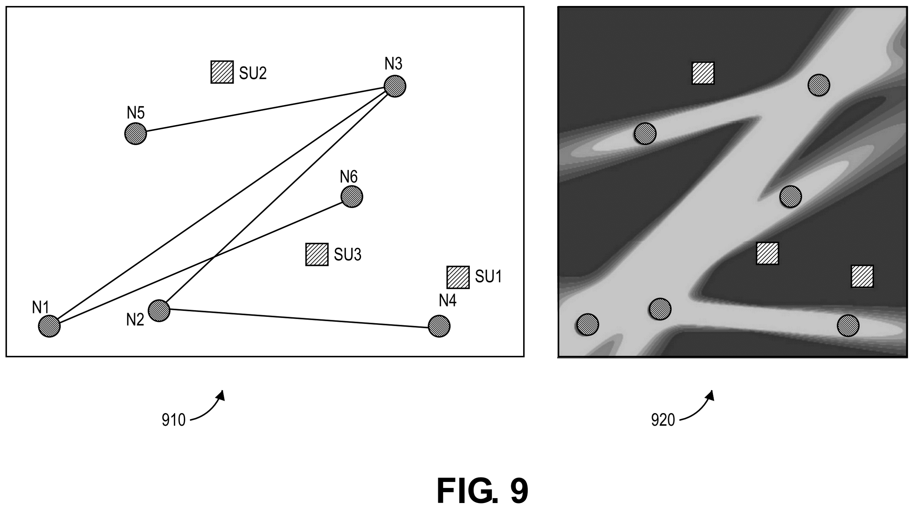

Fig. 9 illustrates a communication network topology 910 produced by an example after movement of the electronic surveillance unit positions shown in Fig. 8, as well as an associated RF emission map 920.

Figs. 3 and 7-9 show that communication network topology can be adapted online to minimize RF indiscretions as electronic surveillance units move. These figures also demonstrate some interesting behaviors in the network topology. For example, in Fig. 7, node N1 and N2 do not directly communicate, despite their proximity, due to the presence of electronic surveillance unit SU3 in the direct line of sight behind N2.

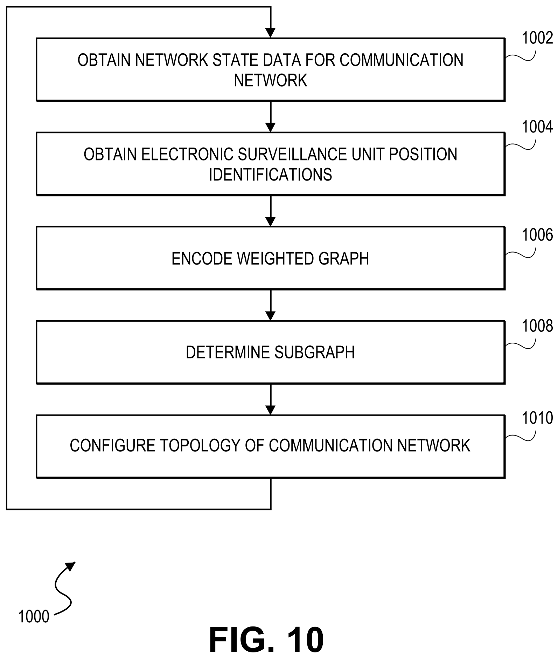

Fig. 10 is a flow chart for a method of configuring a communication network to avoid indiscretions. The communication network may include a plurality of network nodes and a plurality of RF communication channels between nodes. One or more network node may include a broad beam RF antenna and/or a tight beam RF antenna. The method may be performed by a system, such as the system shown and described herein in reference to Fig. 5, for example.

At 1002, the method 1000 includes obtaining network state data. The network state data may include one or more of: identifications of geographical locations of the plurality of network nodes, antenna information for each of the network nodes, and specified receiver power for at least one of the plurality of network nodes. The network state data may be obtained as shown and described herein in reference to, for example, Figs. 1, 3, and 4.

At 1004, the method 1000 includes obtaining position identifications for one or more electronic surveillance units. The position identifications may be obtained as shown and described herein in reference to Fig. 5.

At 1006, the method 1000 includes encoding an indiscretion value weighted graph. The indiscretion value weighted graph may include a plurality of graph vertices and a plurality of edges. Each graph vertex may include an identification of a respective network node. Each edge may include a respective indiscretion value with respect to the plurality of electronic surveillance units. Each indiscretion value may include a composition of individual indiscretion values corresponding to each of the electronic surveillance units, e.g., as shown and described herein in reference to Equation (4). Each individual indiscretion value for a given transmitting network node, a given receiving network node, and a given electronic surveillance unit may include one or more of: a respective transmission power for the given transmitting network node, a respective free space path loss between the given transmitting network node and the given receiving network node, and/or a respective antenna gain in a direction of the given electronic surveillance unit obtained from an antenna of the given transmitting network node when transmitting in a direction of the given receiving network node, e.g., as shown and described herein in reference to Equation (5). The indiscretion value weighted graph may be a complete weighted graph. The actions of 1006 may be performed as shown and described herein in reference to Fig. 3, for example.

At 1008, the method 1000 includes determining a subgraph of the indiscretion value weighted graph. The subgraph may span the graph vertices. The subgraph may be a minimum spanning tree for the complete weighted graph of 1006. The actions of 1008 may be performed as shown and described herein in reference to Figs. 3-7, for example.

At 1002, the method 1000 includes configuring a topology of the communication network according to the subgraph. Configuring the communication network topology may include restricting RF tight beam communications amongst the network nodes to specified communication channels corresponding to the subgraph. In addition, or in the alternative, configuring the communication network topology may include identifying whether and which, if any, communications using tight beam RF antennas are permissible. Note that the configuring of 1002 may include reconfiguring the topology of the network, e.g., the network may be adapted according to 1002. The actions of 1001 may be performed automatically and autonomously according to some examples. In general, the actions of 1010 may be performed as shown and described herein in reference to Fig. 5, for example.

The method 1000 may be repeated, e.g., in real time, such that the wherein the topology of the communication network is reconfigured in real time to account for movement of one or more network nodes and/or one or more electronic surveillance units.

Note that the term "optimization" used herein does not necessarily connote a best possible version. For instance, examples may permit some amount of signal leakage, e.g., some amount of indiscretion, so as to account for latency, for example. The amount of permissible indiscretion may be framed as a parameter when determining a solution to Equation (2), for example.

Many variations of the non-limiting examples expressly disclosed herein are possible. For instance, examples may be used in the context of uni-directional communications, whereby one node communicates to another using a direct-line-of-site channel, but the reverse communication may be routed though one or more additional network nodes rather than the direct-line-of-sight channel. The antenna radiation patterns can also be updated, e.g., if the communication nodes change modes and/or transmission power. Heterogeneous antenna patterns can be used by appropriate selection of the models used in the indiscretion function, e.g., where the models are stored in and retrieved from the antenna radiation pattern database 504, for example. Examples are not limited to communication networks as expressly disclosed herein; for instance, examples may be used for management of local networks for communication among multiple autonomous systems.

Certain examples can be performed using a computer program or set of programs. The computer programs can exist in a variety of forms both active and inactive. For example, the computer programs can exist as software program(s) comprised of program instructions in source code, object code, executable code or other formats; firmware program(s), or hardware description language (HDL) files. Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), flash memory, and magnetic or optical disks or tapes.

Examples of the present disclosure are described herein with reference to flowchart illustrations and/or block diagrams of methods, apparatus (systems), and computer program products according to examples of the disclosure. It will be understood that each block of the flowchart illustrations and/or block diagrams, and combinations of blocks in the flowchart illustrations and/or block diagrams, can be implemented using computer readable program instructions that are executed by an electronic processor.

These computer readable program instructions may be provided to a processor of a general-purpose computer, special purpose computer, or other programmable data processing apparatus to produce a machine, such that the instructions, which execute via the electronic processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement features of the function/act specified in the flowchart and/or block diagram block or blocks.

In examples, the computer readable program instructions may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the C programming language or similar programming languages. The computer readable program instructions may execute entirely on a user's computer, partly on the user's computer, as a stand-alone software package, partly on the user's computer and partly on a remote computer or entirely on the remote computer or server.

As used herein, the terms "A or B" and "A and/or B" are intended to encompass A, B, or {A and B}. Further, the terms "A, B, or C" and "A, B, and/or C" are intended to encompass single items, pairs of items, or all items, that is, all of: A, B, C, {A and B}, {A and C}, {B and C}, and {A and B and C}. The term "or" as used herein means "and/or."

As used herein, language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The techniques presented and claimed herein are referenced and applied to material objects and concrete examples of a practical nature that demonstrably improve the present technical field and, as such, are not abstract, intangible or purely theoretical.

While examples have been described, those skilled in the art will be able to make various modifications to the described examples without departing from the scope of the appended claims. The terms and descriptions used herein are set forth by way of illustration only and are not meant as limitations. In particular, although the method has been described by examples, the steps of the method can be performed in a different order than illustrated or simultaneously. Those skilled in the art will recognize that these and other variations are possible within the scope as defined in the following claims.

Further examples are set out in the following clauses.

Clause 1. A system (500) for configuring a communication network to avoid indiscretions, wherein the communication network comprises a plurality of network nodes and a plurality of radio-frequency (RF) communication channels, the system comprising: a non-transitory computer readable medium comprising instructions; and at least one electronic processor that executes the instructions to perform operations comprising:
obtaining (1002) network state data (522), wherein the network state data comprises identifications of geographical locations of the plurality of network nodes;
obtaining (1004) position identifications (524) for a plurality of electronic surveillance units (151, 152);
encoding (1006) an indiscretion value weighted graph (310) comprising a plurality of graph vertices and a plurality of edges, wherein a respective graph vertex comprises an identification of a respective network node, and wherein a respective edge comprises a respective indiscretion value with respect to the plurality of electronic surveillance units;
determining (1008) a subgraph of the indiscretion value weighted graph, wherein the subgraph spans the plurality of graph vertices; and
configuring (1010) a topology of the communication network according to the subgraph.

Clause 2. The system of clause 1, wherein the configuring the topology of the communication network comprises restricting **RF** tight beam (112, 122, 126, 132) communications amongst the network nodes to specified communication channels corresponding to the subgraph.

Clause 3. The system of clause 1 or 2, wherein the operations further comprise repeating, in real time, the obtaining the network state data, the obtaining the position identification, the encoding, the determining, and the configuring, wherein the operations reconfigure the topology in real time and account for movement of at least one of a network node of the plurality of network nodes or an electronic surveillance unit of the plurality of electronic surveillance units.

Clause 4. The system of any of clauses 1 to 3, wherein at least one network node comprises a broad beam (114, 124, 134) RF antenna and a tight beam RF antenna, and wherein the configuring comprises identifying whether communications using the tight beam RF antenna are permissible.

Clause 5. The system of any of clauses 1 to 4, wherein the plurality of network nodes comprises at least one uncrewed aircraft.

Clause 6. The system of any of clauses 1 to 5, wherein a respective indiscretion value comprises a composition of individual indiscretion values corresponding to the plurality of electronic surveillance units.

Clause 7. The system of clause 6, wherein a respective individual indiscretion value for a given transmitting network node, a given receiving network node, and a given electronic surveillance unit comprises: a respective transmission power for the given transmitting network node, and a respective free space path loss between the given transmitting network node and the given receiving network node.

Clause 8. The system of clause 7, wherein the respective individual indiscretion value for the given transmitting network node, the given receiving network node, and the given electronic surveillance further comprises a respective antenna gain in a direction of the given electronic surveillance unit obtained from an antenna of the given transmitting network node when transmitting in a direction of the given receiving network node.

Clause 9. The system of any of clauses 1 to 8, wherein the network state data further comprises: antenna information for each of the plurality of network nodes, and specified receiver power for at least one of the plurality of network nodes.

Clause 10. The system of any of clauses 1 to 9, wherein the indiscretion value weighted graph comprises a complete weighted graph, and wherein the subgraph is a minimum spanning tree for the complete weighted graph.

## Claims

1. A method (1000) of configuring a communication network to avoid indiscretions, wherein the communication network comprises a plurality of network nodes and a plurality of radio-frequency (RF) communication channels, the method comprising:
obtaining (1002) network state data (522), wherein the network state data comprises identifications of geographical locations of the plurality of network nodes;
obtaining (1004) position identifications (524) for a plurality of electronic surveillance units n(151, 152);
encoding (1006) an indiscretion value weighted graph (310) comprising a plurality of graph vertices and a plurality of edges, wherein a respective graph vertex comprises an identification of a respective network node, and wherein a respective edge comprises a respective indiscretion value with respect to the plurality of electronic surveillance units;
determining (1008) a subgraph of the indiscretion value weighted graph, wherein the subgraph spans the plurality of graph vertices; and
configuring (1010) a topology of the communication network according to the subgraph.

2. The method of claim 1, wherein the configuring the topology of the communication network comprises restricting RF tight beam (112, 122, 126, 132) communications amongst the network nodes to specified communication channels corresponding to the subgraph.

3. The method of claim 1 or 2, further comprising repeating, in real time, the obtaining the network state data, the obtaining the position identification, the encoding, the determining, and the configuring, wherein the topology is reconfigured in real time and accounts for movement of at least one of a network node of the plurality of network nodes or an electronic surveillance unit of the plurality of electronic surveillance units.

4. The method of any preceding claim, wherein at least one network node comprises a broad beam (114, 124, 134) RF antenna and a tight beam (112, 122, 126, 132) **RF** antenna, and wherein the configuring comprises identifying whether communications using the tight beam **RF** antenna are permissible.

5. The method of any preceding claim, wherein the plurality of network nodes comprises at least one uncrewed aircraft.

6. The method of any preceding claim, wherein a respective indiscretion value comprises a composition of individual indiscretion values corresponding to the plurality of electronic surveillance units.

7. The method of claim 6, wherein a respective individual indiscretion value for a given transmitting network node, a given receiving network node, and a given electronic surveillance unit comprises: a respective transmission power for the given transmitting network node, and a respective free space path loss between the given transmitting network node and the given receiving network node.

8. The method of claim 7, wherein the respective individual indiscretion value for the given transmitting network node, the given receiving network node, and the given electronic surveillance further comprises a respective antenna gain in a direction of the given electronic surveillance unit obtained from an antenna of the given transmitting network node when transmitting in a direction of the given receiving network node.

9. The method of any preceding claim, wherein the network state data further comprises:
antenna information for each of the plurality of network nodes, and
specified receiver power for at least one of the plurality of network nodes.

10. The method of any preceding claim, wherein:
the indiscretion value weighted graph comprises a complete weighted graph, and
the subgraph is a minimum spanning tree for the complete weighted graph.

11. A computer program comprising computer program instructions that, when executed by one or more computer processors, cause the one or more computer processors to perform the method of any preceding claim.

12. A non-transitory computer readable medium having stored thereon the computer program of claim 11.

13. A computer system (500) for configuring a communication network to avoid indiscretions, the computer system (500) comprising:
one or more computer processors; and
the non-transitory computer readable medium of claim 12.

14. A system (500) for configuring a communication network to avoid indiscretions, wherein the system comprises:
a communication network comprising a plurality of network nodes and a plurality of radio-frequency (RF) communication channels;
one or more computer processors; and
the non-transitory computer readable medium of claim 12.

15. The system (500) of claim 14, wherein the plurality of network nodes comprises at least one uncrewed aircraft.
